# EUROPEAN PATENT APPLICATION

(11) **EP 4 556 519 A1**
(43) Date of publication of application: **21.05.2025**
(21) Application number: 24212999.7
(22) Date of filing: 14.11.2024
(51) Int. Cl.: C08K 3/38, C08K 3/36, C08K 5/5435, C08L 71/00

(54) **MULTI-ADDITIVE SYSTEM FOR HIGH DIELECTRIC STRENGTH, HIGH THERMAL CONDUCTIVITY, HIGH TEMPERATURE POLYMER INSULATION FOR ADVANCED WIRING APPLICATION**

(30) Priority: 15.11.2023 US 202363599306 P
(71) Applicant: Eaton Intelligent Power Limited, Dublin 4 (IE)
(72) Inventor: MAPKAR, Javed Abdurrazzaq, Dublin (IE); CHEN, Si, Dublin (IE); GHOSH, Monoj, Dublin (IE)
(74) Representative: Schwan Schorer & Partner mbB

(57) **Abstract**

Thermally conductive electrically insulating PAEK nanocomposite compositions and polymers suitable for improved electric motor windings are provided. PAEK nanocomposite insulated magnet wires are also provided.

## Description

### CROSS-REFERENCES TO RELATED APPLICATIONS

This application claims the benefit of U.S. Provisional Application No. 63/599,306, filed November 15, 2023, which is incorporated by reference herein in its entirety.

### BACKGROUND

With an increase in electrification of vehicles and aircrafts there is an increase in demand of high-performance polymers and polymer composites with enhanced properties to increase the safety, efficiency, and reliability of the components. High performance polymers are used in electrical machines as insulation on motor windings, slot lines, encapsulation, are key to achieve high power density and voltage ratings.

On average, most electric vehicles (EVs) run on 400 volts (V). However, there are a few EV variants that run on as much as 800 V. Higher voltage EVs cost more but can offer better charge time and efficiency. In the future, higher voltage electric motor systems of 800+ V are desirable in the mobility (e.g., automotive, aerospace) market. The higher level of voltage increases stresses on different components of insulating system such as conductor primary insulation, slot liner, and phase to phase insulation. Other challenges include higher voltage difference between the conductors and increased thermal stress.

Potential solutions may involve different electric motor winding configurations to improve AC/DC losses, slot fill factor, design compactness. One way to improve desirable properties is to develop advanced insulation with improved dielectric properties, thermal management, and manufacturability.

In current electrical machines, enamels such as polyimide, polyesters and polyamideimide are typically used for insulating the motor windings. Although they provide the insulation requirements, they are limited due to their breakdown strength, dielectric constant, temperature limits and mechanical properties. There is recent development in use of high temperature thermoplastics like poly(ether ether ketone) (PEEK) polymers to replace enamel to provide improved thermal performance up to 260 °C, high dielectric strength in combination with high ductility, stress crack resistance, long-term mechanical strength, and outstanding chemical resistance. The magnet wires coated with PEEK polymers can exhibit increased efficiency, power density and torque while reducing the weight and size of electric motors and subsequently increase vehicle range. Although PEEK polymers provide some advantages over enamel for magnet wire, the benefits are limited due to the low thermal conductivity of PEEK polymers, low comparative tracking index (CTI), and an upper limit on dielectric breakdown (DB) strength, and partial discharge (PD) resistance.

Improving the thermal conductivity of PEEK polymer materials, along with improving dielectric breakdown (DB) strength, low comparative tracking index (CTI), high voltage tracking resistance (HVTR), and partial discharge (PD) resistance will allow for increased power requirements, reduction in size, and support of extreme high voltage applications of electric motors with improved safety and reliability.

### SUMMARY

Thermally conductive electrically insulating PAEK nanocomposite compositions and polymers suitable for improved electric motor windings are provided. PAEK nanocomposite insulated magnet wires are also provided. In some cases, thermally conductive electrically insulating PAEK nanocomposite compositions and polymers are provided that exhibit thermal conductivity of > 0.40 W/m-K. In some cases, thermally conductive electrically insulating PAEK nanocomposite compositions and polymers are provided that exhibit a dielectric constant of < 3.0.

A PAEK nanocomposite composition is provided comprising: a poly(aryl ether ketone) (PAEK) base polymer; one or more thermally conductive fillers; a spherical nanofiller; and a dispersing and processing additive.

A PAEK nanocomposite material is provided formed from a composition comprising: a poly(aryl ether ketone) (PAEK) base polymer; one or more thermally conductive fillers; a spherical nanofiller; and a dispersing and processing additive.

A thermally conductive PAEK nanocomposite polymer material is provided formed from a composition comprising: a poly(aryl ether ketone) (PAEK) base polymer; one or more thermally conductive fillers; a spherical nanofiller; and a dispersing and processing additive.

In some cases, the PAEK base polymer is selected from the group consisting of a poly(ether ether ketone) (PEEK) and a poly(aryl ether ketone ketone) (PEKK).

In some cases, the composition comprises the PAEK base polymer in a range of from about 70wt% to about 95wt%, about 75wt% to about 92 wt%, or about 80 wt% to about 90 wt%.

In some cases, the one or more thermally conductive fillers are selected from the group consisting of selected from boron nitride (BN), aluminum nitride (AlN), silicon nitride (Si₃N₄), silicon carbide (SiC), aluminum oxide (Al₂O₃), zinc oxide (ZnO), and magnesium oxide (MgO).

In some cases, the composition comprises the one or more thermally conductive fillers in a combined range between about 5wt% to about 25wt%, about 7 wt% to about 20 wt%, or about 8 wt% to about 15 wt%. In some cases, the one or more thermally conductive fillers comprise a thermally conductive microfiller and a thermally conductive nanofiller. In some cases, the weight ratio of the thermally conductive microfiller to the thermally conductive nanofiller from about 20:1 to about 1:1, from about 15:1 to about 2:1, or from about 10:1 to about 4:1. In some cases, the thermally conductive microfiller has a D50 particle size in a range of about 0.3 to about 200 microns or about 7 to about 180 microns. In some cases, the thermally conductive nanofiller has an average particle size (APS) having a diameter in a range of about 200 to about 800 nm and a thickness in a range of about 10 nm to about 40 nm.

In some cases, the spherical nanofiller is selected from the group consisting of fused silica, nano alumina, nano silica, boron nitride, fumed alumina, zinc oxide, and titanium dioxide.

In some cases, the composition comprises the spherical nanofiller in a range of from about 0.1 wt% to about 5 wt%, about 0.5 wt% to about 4 wt%. or about 1 wt% to about 3 wt%.

In some cases, the dispersing and processing additive is selected from the group consisting of polyhedral oligomeric silsesquioxanes (POSS), silanes, silanol-POSS, and waxes.

In some cases, the composition comprises the dispersing and processing additive in a range from about 0.1 wt% to about 10 wt%, about 0.3 to about 7.0 wt%, about 0.5 wt% to about 5 wt%, and about 1 wt% to about 4.0 wt%.

In some cases, the composition further comprises one or more structural fillers, optionally wherein the structural fillers are selected from the group consisiting of glass fiber, high silica glass fiber, aluminum silicate fiber, ceramic fiber, mullite fiber, basalt fiber, and carbon fiber.

A thermally conductive PAEK nanocomposite polymer formed from a composition according to disclosure is provided, wherein the PAEK nanocomposite polymer exhibits one or more properties selected from the group consisting of tensile strength of >80.0 MPa or >85.0 MPa; and tensile elongation of >40%, >50%, or >60%.

A melt processed PAEK nanocomposite formed from a composition according to the disclosure is provided, wherein the melt processed nanocomposite exhibits one or more properties selected from the group consisting of a tensile strength of >80.0 MPa or >85.0 MPa; and a tensile elongation of >40%, >50%, or >60%.

A PAEK nanocomposite composition is provided comprising: from about 70wt% to about 95wt% of a poly(aryl ether ketone) (PAEK) base polymer; from about 5wt% to about 25wt% of one or more thermally conductive fillers; from about 5 wt%, about 0.5 wt% of a spherical nanofiller; and from about 0.1 wt% to about 10 wt% of a dispersing and processing additive.

A PAEK nanocomposite insulated wire is provided, wherein the PAEK nanocomposite is formed from a composition comprising a poly(aryl ether ketone) (PAEK) base polymer; one or more thermally conductive fillers; a spherical nanofiller; and a dispersing and processing additive. In some cases, the wire is selected from the group consisting of copper wire, and aluminum wire.

In some cases, the wire insulation has a nominal thickness of from about 25 to about 1,000 microns, about 25 to about 750 microns, about 25 to about 500 microns, from about 25 to about 250 microns, about 50 to about 200 microns, or about 75 to about 150 microns. In some cases, the insulated wire exhibits one or more properties selected from the group consisting of dielectric breakdown strength of > than 17 kV/mm, > 20 kV/mm, or > 22 kV/mm; dielectric breakdown voltage of > 13 kV at 25 deg C; dielectric breakdown voltage of > 15 kV at 100 deg C; dielectric breakdown voltage of > 14 kV at 180 deg C; thermal conductivity of > 0.40 W/m-K; dielectric constant < 3.0; partial discharge inception voltage (PDIV) of at least 1200 V at 25 deg C at nominal 0.1 mm thickness; partial discharge inception voltage of at least 1100 V at 100 deg C at nominal 0.1 mm thickness; partial discharge inception voltage of at least 1000 V at 180 deg C at nominal 0.1 mm thickness; and partial discharge inception voltage (PDIV) of at least 2000 V at 25 deg C at nominal 0.3 mm thickness.

A method of making a PAEK nanocomposite insulated wire is provided, the method comprising feeding a wire from a conductor feed through a tension controller; preheating the wire; moving the preheated wire through an extruder and crosshead die; extruding a melt processed PAEK nanocomposite composition around the preheated wire to provide a coated wire; and cooling the coated wire to provide the insulated wire, wherein the PAEK nanocomposite composition comprises a poly(aryl ether ketone) (PAEK) base polymer; one or more thermally conductive fillers; a spherical nanofiller; and a dispersing and processing additive.

An insulated article is provided, said article coated with a thermally conductive PAEK nanocomposite polymer prepared from a composition comprising a poly(aryl ether ketone) (PAEK) base polymer; one or more thermally conductive fillers; a spherical nanofiller; and a dispersing and processing additive. In some cases, the article is selected from the group consisting of a wire, conductor, busbar, slot liner, transformer winding, and phase to phase insulation. In some cases, the insulation has a nominal thickness of from about 25 to about 1,000 microns, about 25 to about 750 microns, about 25 to about 500 microns, about 25 to about 250 microns, about 50 to about 200 microns, or about 75 to about 150 microns.

### BRIEF DESCRIPTION OF THE DRAWINGS

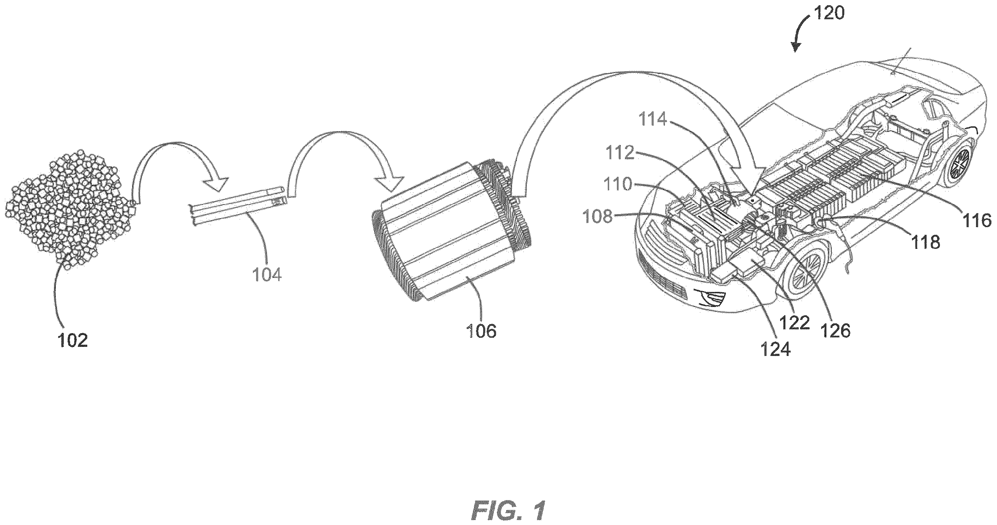

FIG. 1 shows a schematic of utilization of the polymer according to the present disclosure for use as insulation for electric motor windings.

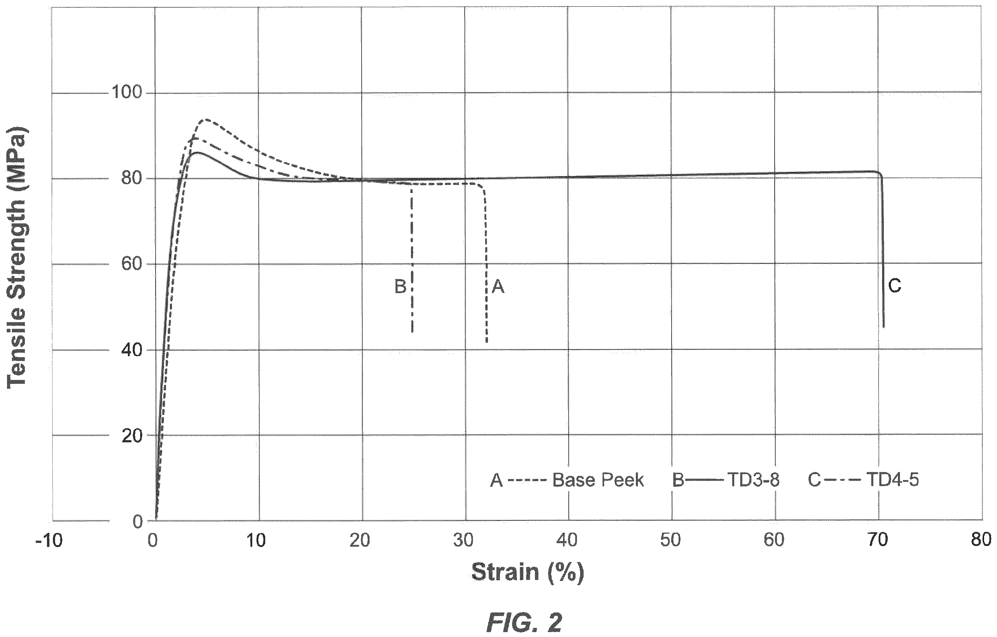

FIG. 2 shows a graph of tensile strength vs. strain for inventive PEEK nanocomposites TD3-8 (B) and TD4-5 (C) compared to base PEEK polymer (A). The inventive PEEK nanocomposite TD4-5 exhibits improved tensile strength, elongation, and toughness compared to base PEEK polymer.

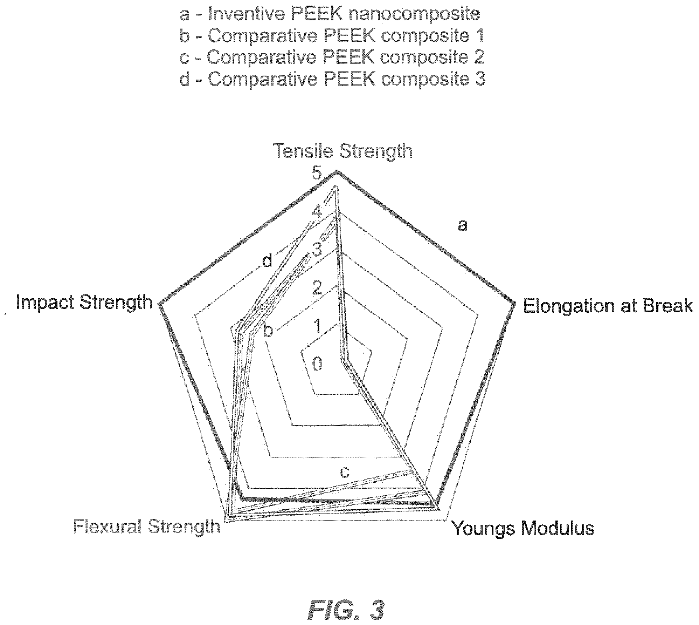

FIG. 3 shows a graph illustrating relative properties of tensile strength, elongation at break, Youngs modulus, flexural strength, and impact strength of inventive PEEK nanocomposite (a) compared to 3 different commercially available PEEK composites (b, c, and d). The inventive PEEK nanocomposite (a) exhibits substantially improved elongation at break and impact strength compared to commercially available PEEK composites.

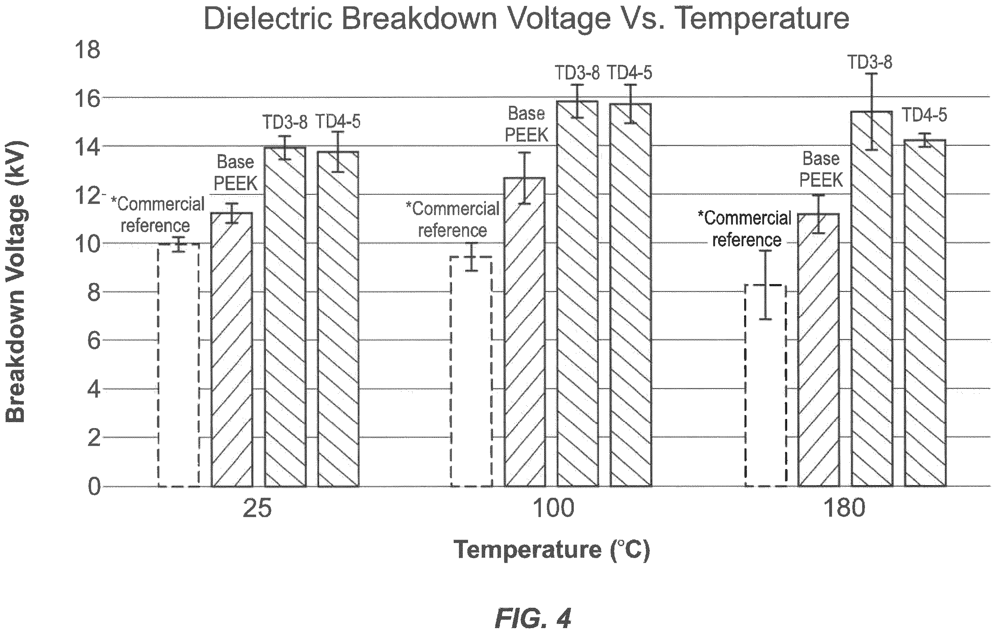

FIG. 4 shows a bar graph of dielectric breakdown voltage vs. temperature for inventive PEEK nanocomposite 3-coated wire, inventive PEEK nanocomposite 4-coated wire, base PEEK coated wire, and commercial reference PEEK rectangular wire. PEEK nanocomposite insulation exhibited significantly higher dielectric breakdown voltage than base PEEK (∼24%) at RT. The PEEK nanocomposite also exhibited improved electrical properties at elevated temperatures.

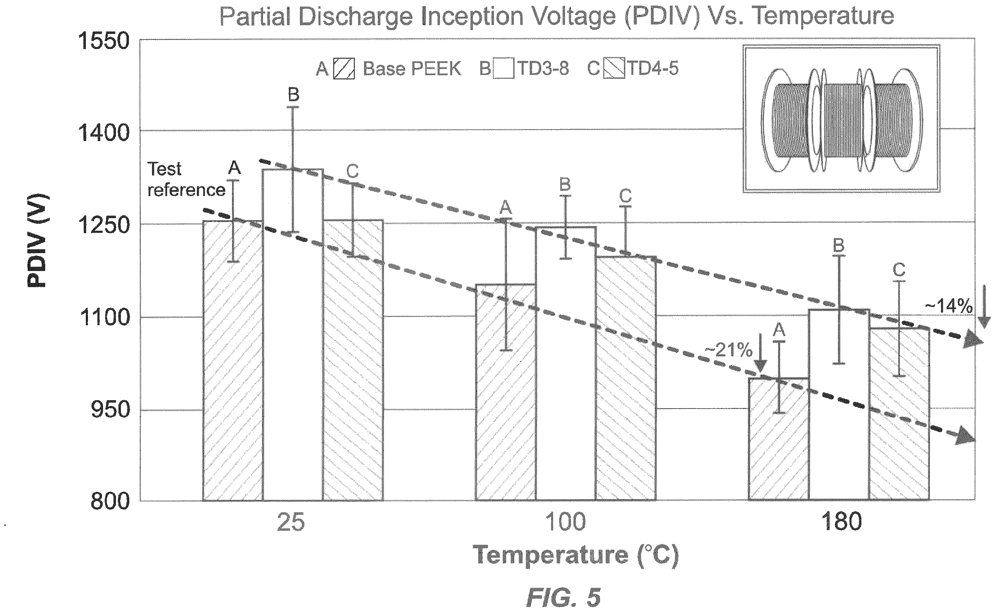

FIG. 5 shows a bar graph of partial discharge inception voltage (PDIV) vs. temperature for two inventive PEEK nanocomposite compositions TD3-8 -and TD4-5 coated wires compared to base PEEK polymer coated wire at RT (25 deg C), 100 deg C, and 180 deg C at nominal 0.1 mm thickness. PEEK nanocomposite insulation exhibited higher PDIV than base PEEK at elevated temperatures.

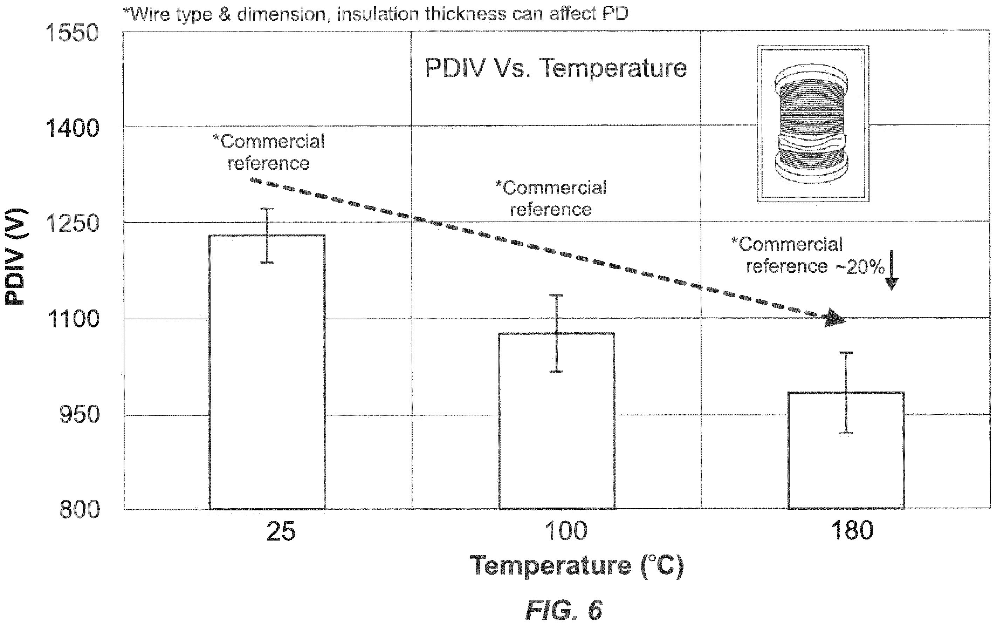

FIG. 6 shows a bar graph of PDIV vs. temperature for a commercial reference PEEK coated rectangular wire having an insulation thickness of ∼110-130 micrometers. Commercial reference PEEK coated rectangular wire appeared to have lower PDIV at RT (25 deg C) and higher temperatures (100 deg C and 180 deg C) when compared to either of the inventive PEEK nanocomposite coated wires.

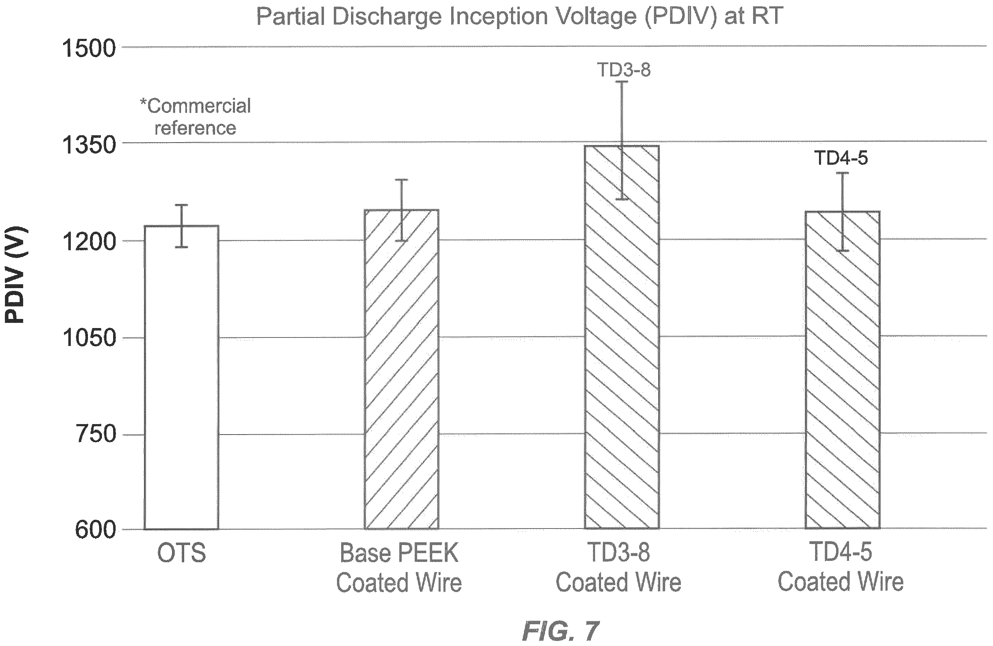

FIG. 7 shows a bar graph of partial discharge inception voltage (PDIV) at room temperature (25 deg C) for inventive TD3-8- and TD4-5 coated wires compared to base PEEK coated wires and a commercial reference wire OTS. Inventive PEEK nanocomposite composition insulation TD3-8 coated wire exhibited higher PDIV than base PEEK. coated wire or commercial reference coated wire.

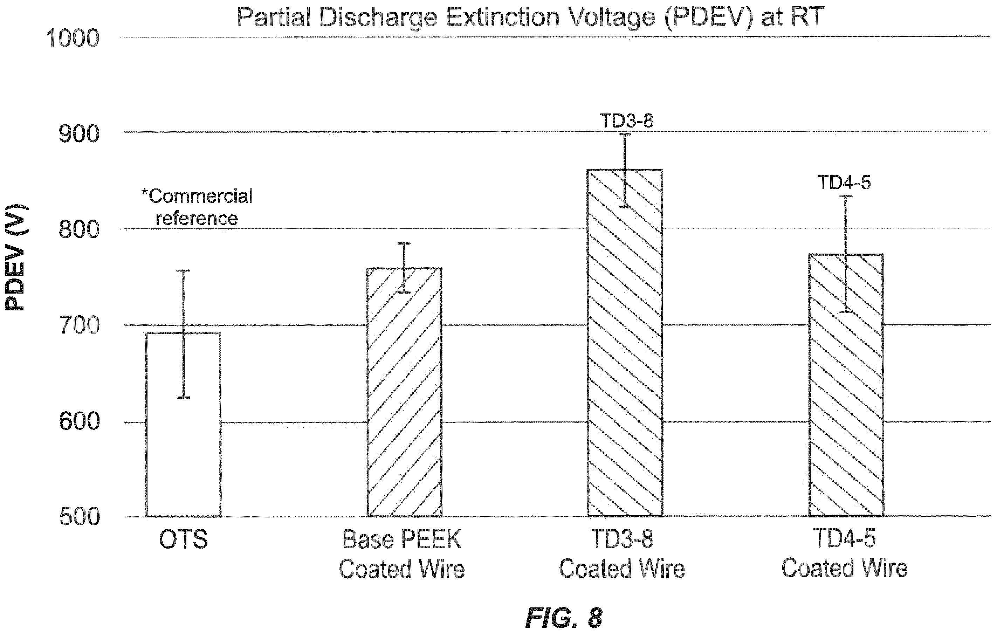

FIG. 8 shows a bar graph of partial discharge extinction voltage (PDEV) at room temperature (25 deg C) for inventive TD3-8- and TD4-5 coated wires compared to base PEEK coated wires and a commercial reference wire OTS. Inventive PEEK nanocomposite composition 3 insulation exhibited ~13% higher PDEV than base PEEK wire.

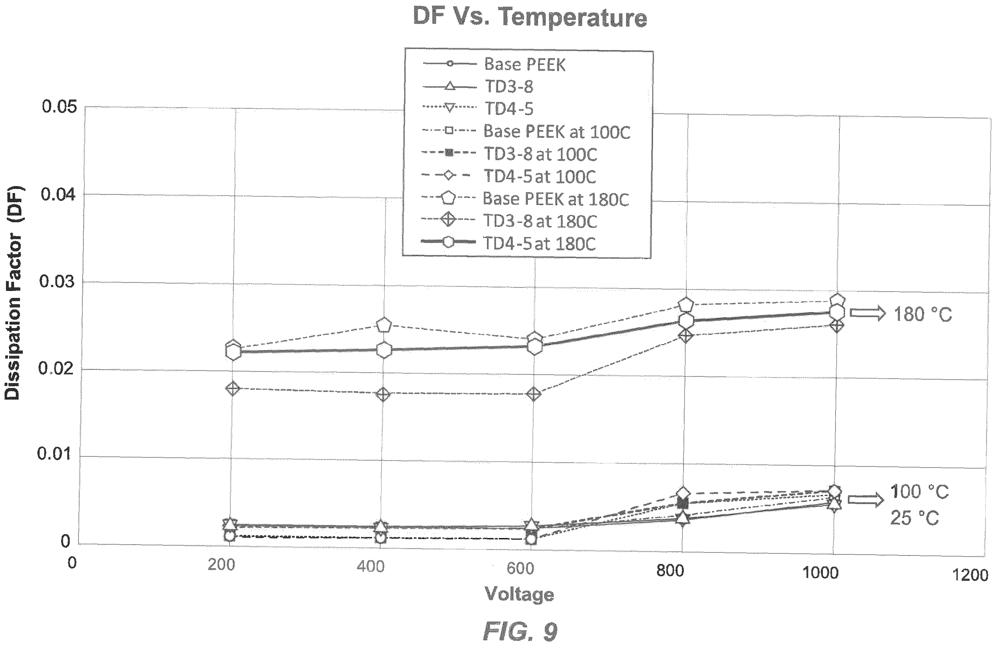

FIG. 9 shows a graph of dissipation factor (DF) vs. voltage for inventive PEEK nanocomposite 3-coated wire (TD3-8), inventive PEEK nanocomposite 4-coated wire (TD4-5), and base PEEK coated round wires at three temperatures 25 deg C, 100 deg C, and 180 deg C. Inventive PEEK nanocomposite coated round wire showed similar DF or loss factor @, < 1% DF as base PEEK coated wire at 25 deg C and 100 deg C. Inventive PEEK nanocomposite coated round wire exhibited lower DF values than base PEEK coated round wire at 180 deg C (<-10-14%). The lower the DF, the more efficient the insulator system.

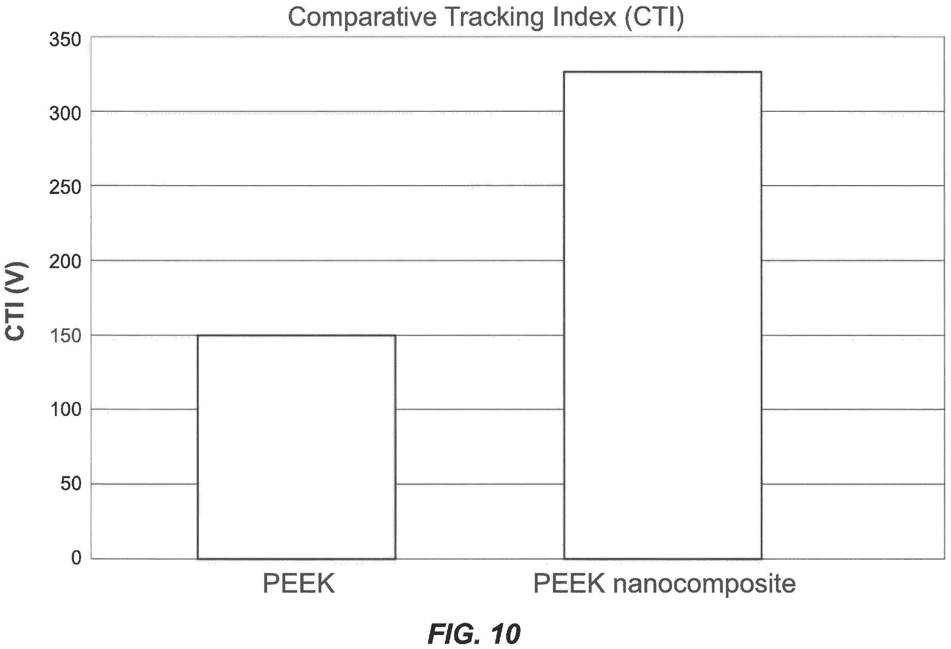

FIG. 10 shows a bar graph of comparative tracking index (CTI) (V) of PEEK nano composite compared to base PEEK polymer. The comparative tracking index of PEEK nanocomposite was increased at least about 2-fold compared to base PEEK polymer.

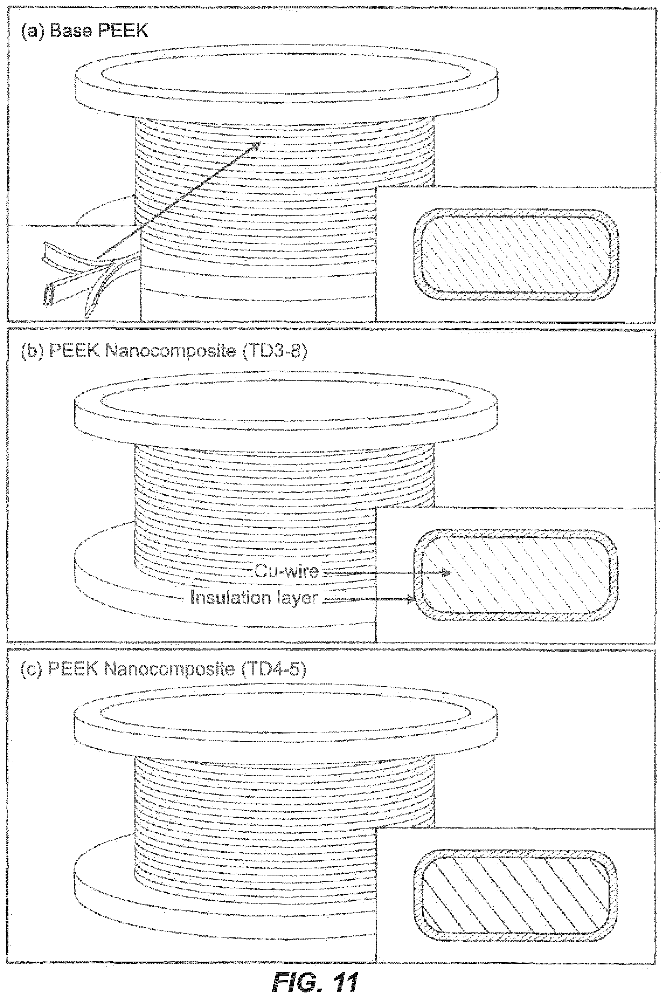

FIG. 11A-C shows insulated Cu-wire. The rectangular shaped magnet-wire was prepared by extrusion coating process. FIG. 11A shows comparative base PEEK insulated rectangular Cu-wire. FIG. 11B shows inventive PEEK Nanocomposite (TD3-8) insulated rectangular Cu-wire. FIG. 11C shows inventive PEEK Nanocomposite (TD4-5) insulated rectangular Cu-wire. A target insulation thickness minimum of ~ 250 µm was achieved.

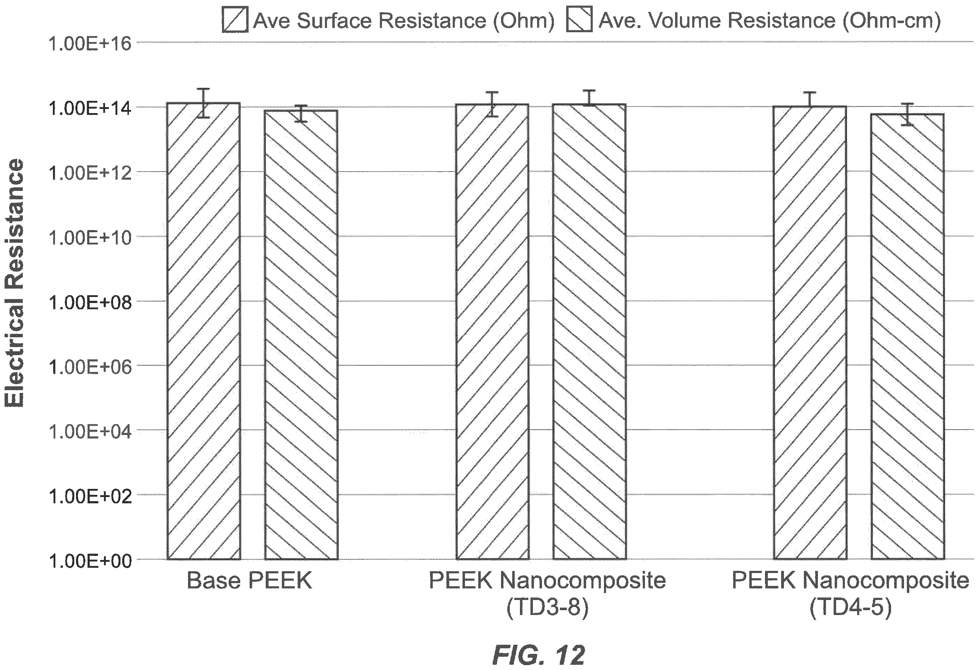

FIG. 12 shows a bar graph of average Surface Resistance (Ohm) and average Volume Resistance (Ohm-cm) for base PEEK, inventive PEEK Nanocomposite (TD3-8) and Inventive PEEK Nanocomposite (TD4-5). The inventive PEEK nanocomposites (TD3-8 and TD4-5) exhibited electrical resistivity within the insulator range (>10¹³ Ohm-cm) similar to the base PEEK material.

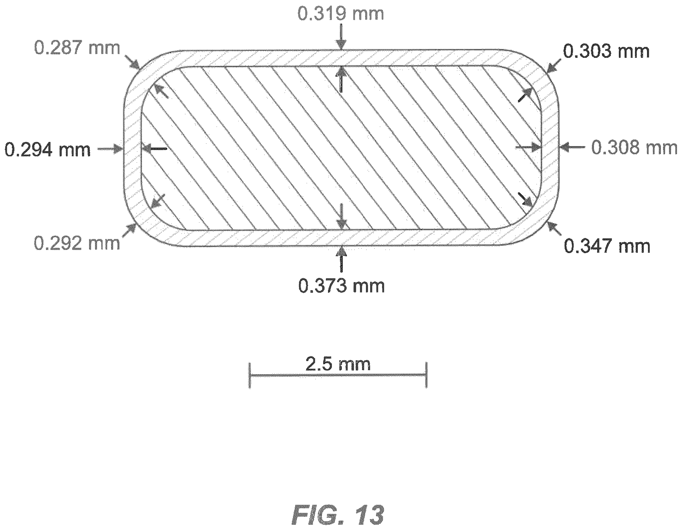

FIG. 13 shows a representative cross-sectional area of a breakdown voltage test specimen of base PEEK insulated Cu-wire. The average insulation thickness on the short side and corners area were used for breakdown strength calculation.

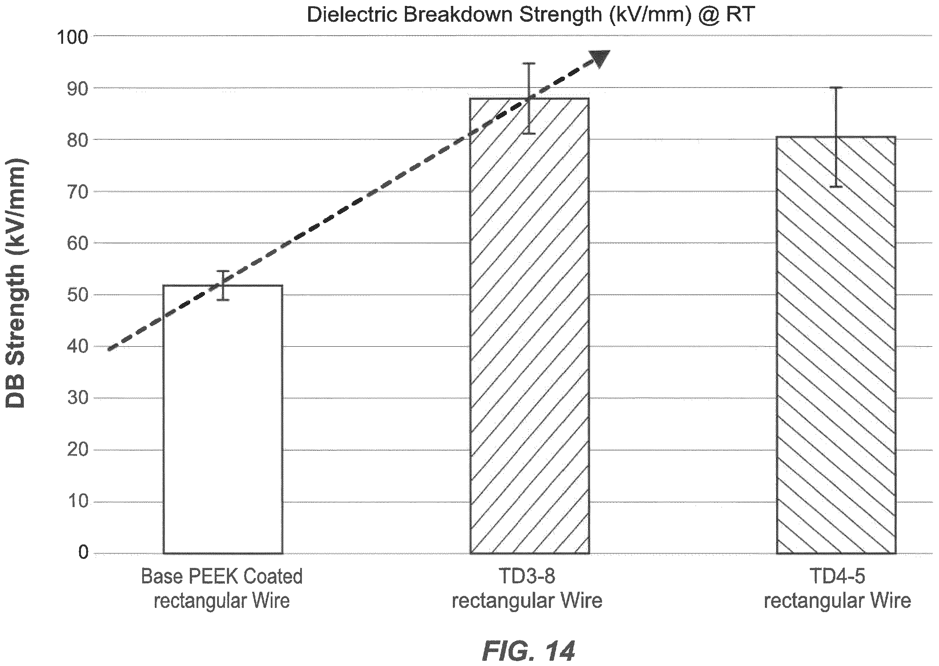

FIG. 14 shows a bar graph of Dielectric Breakdown Strength (kV/mm at room temperature) for comparative base PEEK insulated rectangular wire, and inventive PEEK nanocomposite insulated rectangular wires TD3-8 and TD4..5. The inventive PEEK nanocomposite insulated wires exhibited significantly higher dielectric breakdown strength than comparative base PEEK insulated wire (an increase of ~50-70%) under ASTM D1676.

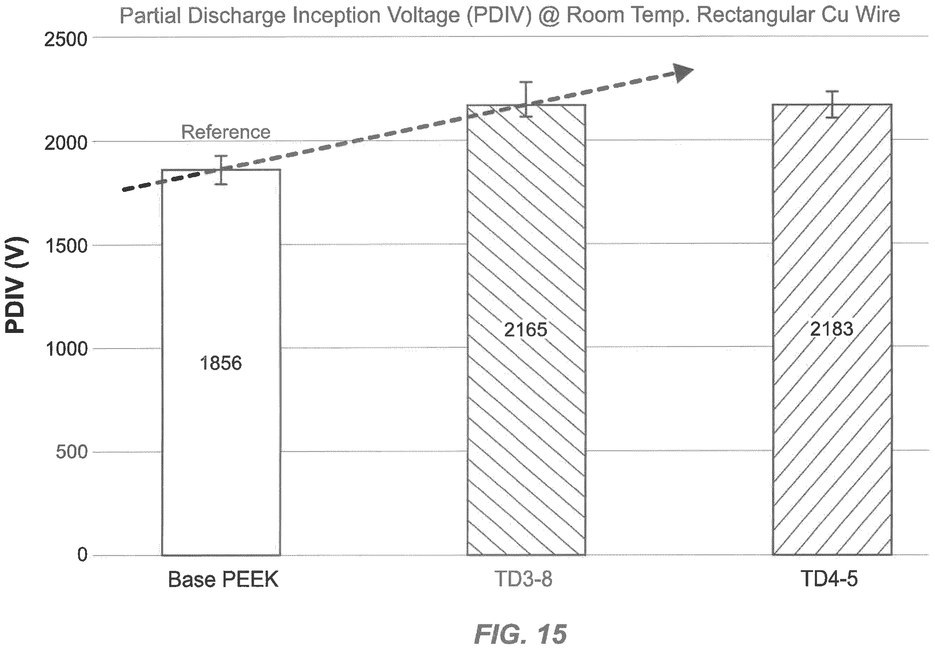

FIG. 15 shows a bar graph of Partial Discharge Inception Voltage (PDIV) at room temperature for comparative base PEEK insulated rectangular wire, and inventive PEEK nanocomposite insulated rectangular wires TD3-8 and TD4-5. The inventive PEEK nanocomposite insulated wires exhibited significantly higher (~17%) PDIV than comparative base PEEK insulated wire at RT under 1EC 60034-27-1.

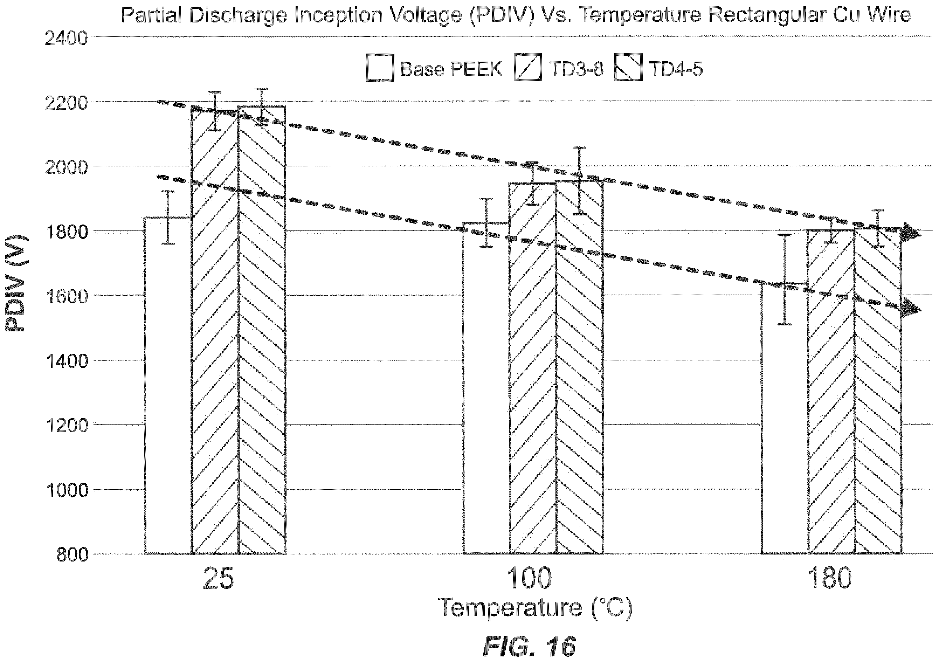

FIG. 16 shows a bar graph of Partial Discharge Inception Voltage (PDIV) at room temperature, 100 deg C, and 180 deg C for comparative base PEEK insulated rectangular wire, and inventive PEEK nanocomposite insulated rectangular wires TD3-8 and TD4-5. The inventive PEEK nanocomposite insulated wires TD3-8 and TD4-5 exhibited better resistance to PD even at elevated temperatures (up to ∼10% at 180 deg C) compared to base PEEK insulated wire.

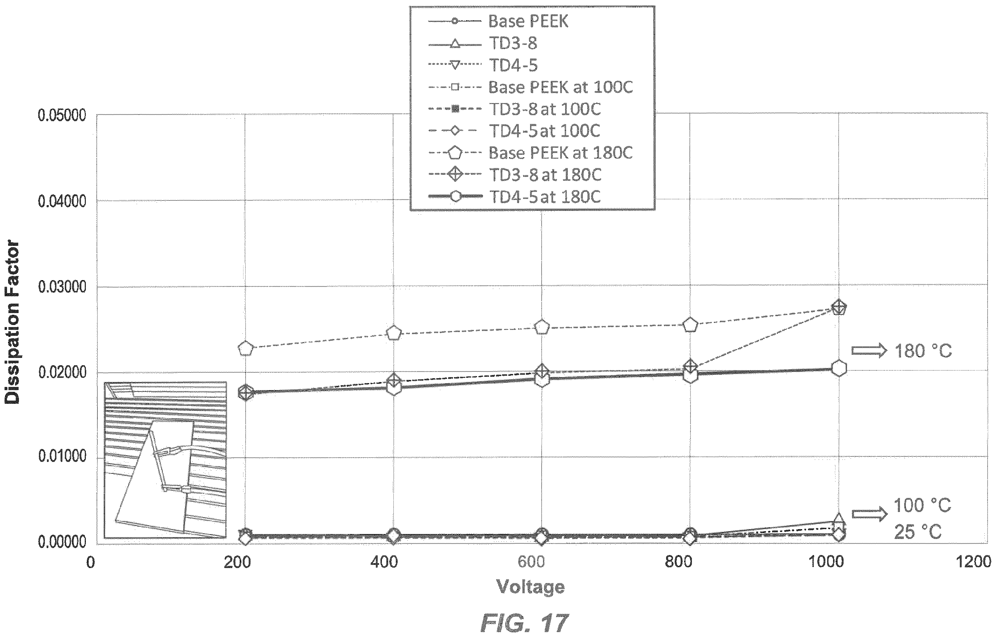

FIG. 17 shows a graph of the Insulation Dissipation Factor for comparative base PEEK and inventive PEEK nanocomposite insulated rectangular Cu-wires TD3-8 and TD4-5 under IEC 60034-18-41 at Voltage Rate: 500 V/s; Frequency: 60 Hz; Test Medium: air; and temperatures of 25 deg C, 100 deg C, and 180±5 C. Rectangular wire coated with PEEK nanocomposites exhibited similar Insulation Dissipation Factor as base PEEK at RT and 100 deg C (<1%). Rectangular wires coated with PEEK nanocomposites TD3-8 and TD4-5 exhibited lower DF values than base PEEK wire at 180 deg C (<15-20%). The lower the DF = more efficient the insulator system.

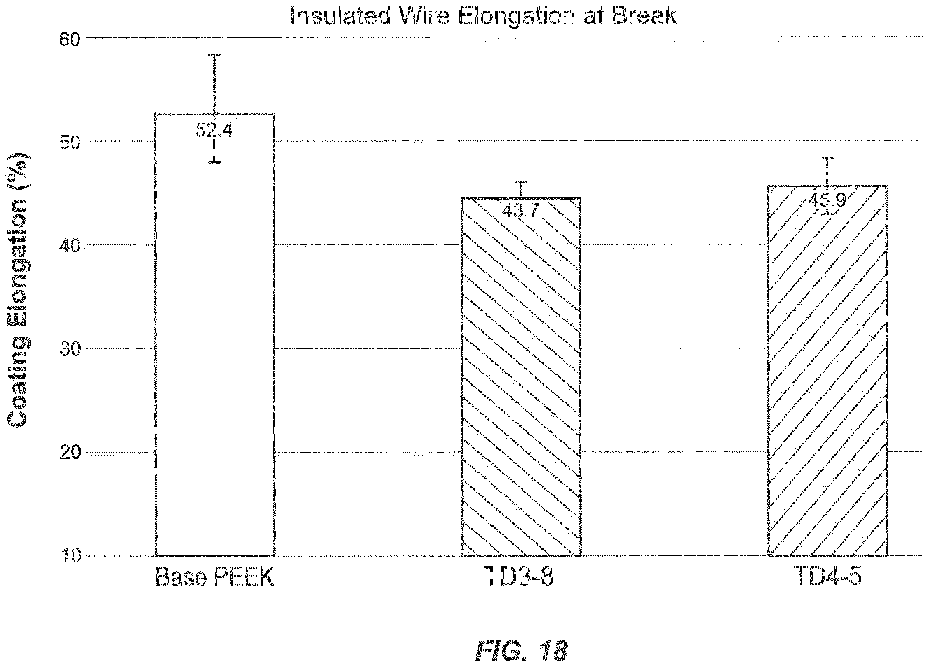

FIG. 18 shows a bar graph of insulated wire average elongation at break. The comparative base PEEK insulated rectangular Cu-wire exhibited 52.4% coating elongation at break. Inventive TD3-8 and TD4-5 insulated rectangular Cu-wire exhibited 43.7% and 45.9% elongation at break, respectively.

### DETAILED DESCRIPTION OF THE INVENTION

High thermally conductive, high dielectric strength, PAEK nanocomposite compositions, materials, and methods are provided resulting in improved ductility and toughness compared to base PAEK polymer materials. A PAEK nanocomposite composition is provided comprising a combination of different filler chemistries, sizes and shapes (nanofiller and micro) in certain ratios was found to enhance the properties of the composite not feasible with addition of an individual nanofiller. The specific choice of base polymer, functional fillers, and processing additives has been found to improve the dispersion, adhesion, and processing of the composite material.

The enhancement in properties achieved with the inventive nanocomposite polymer over the base polymer may include an increase in thermal conductivity of at least about 1.1x to 5x, increase in tensile strength of at least about 1.1x to 1.25x, increase in toughness of at least about 1.5x to 3x, increase in dielectric strength of at least about 1.5x to 3x, and increase in elongation at break of at least about 1.5x to 3.5x.

The inventive PAEK nanocomposite polymer compositions may be used as insulation for electric motor windings as shown in FIG. 1. The PEEK nanocomposite material 102 is used for coating PEEK nanocomposite insulated wire 104 for electric motor windings 106. The e-motor 106 is used in an electric automobile 120 having a thermal system (cooling) 108, DC/DC converter 110, power electronic controller 112, electric traction motor 114, traction battery pack 116, charge port 118, transmission 126, onboard charger 122, and battery (auxiliary) 124.

The properties of the inventive PEEK nanocomposite polymer compositions can help prevent short-circuiting and resist possible partial discharges; help minimize current leakage from the system, enable operating the system at higher voltage, and protect the components from thermal stress, mechanical stress, and harsh environments.

The inventive PEEK nanocomposites exhibit improved tensile strength compared to base PEEK polymer as shown in FIG. 2. The inventive PEEK nanocomposites also exhibit improved elongation at break, impact strength and tensile strength compared to commercially available PEEK composites as shown in FIG. 3.

Wires coated with inventive PEEK nanocomposites exhibit significantly increased dielectric breakdown voltage at room temperature (25 deg C) and at elevated temperatures (100 deg C and 180 deg C) compared to base PEEK polymer coated magnet wires and commercially available PEEK coated wires as shown in FIG. 4.

Wires coated with inventive PEEK nanocomposites exhibit improved partial discharge inception voltage (PDIV) compared to base PEEK polymer coated wires and commercially available PEEK coated wires particularly at elevated temperatures as shown in FIG. 5 and FIG. 6.

PEEK nanocomposite exhibits improved dielectric breakdown strength compared to base PEEK polymer as shown in FIG. 4.

The PAEK nanocomposite retained excellent electrical properties at RT and even at elevated temperatures. The PAEK nanocomposite polymer compositions are particularly suitable for use in 800V and higher voltage systems in the automotive EV market.

In some cases, the PAEK nanocomposite composition or polymer includes a thermally conductive platelet-shaped microfiller, a thermally conductive platelet-shaped nanofiller, and a spherical nanofiller. In some cases, the PEEK nanocomposite composition or polymer further includes a structural fiber filler. In some cases, the mixture of platelet and spherical nanofillers with structural fiber fillers has been found to improve adhesion of fiber and matrix in PAEK nanocomposites.

### Definitions

The singular forms "a", "an" and "the" are intended to include the plural forms as well, unless the context clearly indicates otherwise.

The term "and/or" refers to and encompasses any and all possible combinations of one or more of the associated listed items.

The term "about," when referring to a measurable value such as an amount of a compound, dose, time, temperature, and the like, is meant to encompass variations of +/-10%, 5%, 1%, 0.5%, or even 0.1% of the specified amount.

In the specification and claims, numerical values can be combined to form new or non-disclosed ranges.

The terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Unless otherwise defined, all terms, including technical and scientific terms used in the description, have the same meaning as commonly understood by one of ordinary skill in the art to which this disclosure belongs. In the event of conflicting terminology, the present specification is controlling.

Unless otherwise specified, the term "room temperature" (RT) refers to about 25 °C.

The term "nanofiller" refers to a filler having a shape with nanoscale size in one, two, or three dimensions and at least one dimension in the 1-100 nm range.

The term "microfiller" refers to a filler having a shape with micron scale size in one, two, or three dimensions with no dimension < 100 nm and at least one dimension in a range of 0.1-500 microns.

All patents, patent applications and publications referred to herein are incorporated by reference in their entirety.

The embodiments described in one aspect of the present disclosure are not limited to the aspect described. The embodiments may also be applied to a different aspect of the disclosure as long as the embodiments do not prevent these aspects of the disclosure from operating for its intended purpose.

### Compositions

PEEK nanocomposite compositions and materials are provided comprising a PAEK base polymer, a thermally conductive microfiller, a thermally conductive nanofiller, and a dispersing and processing additives. The inventive thermally conductive nanocomposite solid polymer may be prepared from a composition according to Table 1.

**Table 1. PAEK Nanocomposite Compositions**

| Function | Composition (Weight %) | | |
|---|---|---|---|
| | Formula A | Formula B | Formula C |
| PAEK base polymer | 70-95 | 75-92 | 80-90 |
| Thennally-conductive microfiller | 5-25 | 5-15 | 7-12 |
| Thermally-conductive nanofiller | 0.25-5 | 0.5-5 | 0.5-3 |
| Spherical nanofiller | 0.1-5 | 0.25-4 | 0.5-3 |
| Processing additive | 0.25-5 | 0.5-4 | 1-4 |

| | | | |
|---|---|---|---|
| Base Polymers | | | |

A thermally conductive polymer nanocomposite material is provided comprising a poly(aryl ether ketone) (PAEK) base polymer, one or more thermally conductive filler, a spherical nanofiller, and a dispersing and processing additive.

### PAEK base polymers

PAEK is a family of semi-crystalline thermoplastics with high temperature stability and high mechanical strength, but can suffer from low thermal conductivity, low comparative tracking index (CTI), and an upper limit on dielectric breakdown strength and partial discharge resistance.

The PAEK molecular backbone contains alternating ketone (R-CO-R) and ether groups (R-O-R). The linking R group is typically a 1,4-substituted aryl group. The PAEK base polymer may be any appropriate PAEK polymer. In some cases, the PAEK polymer may be selected from the group consisting of a poly(ether ether ketone) (PEEK) and a poly(aryl ether ketone ketone) (PEKK). The base PEEK polymer may be a medium to high viscosity PEEK polymer. The base PEEK polymer may be unreinforced. PEEK polymers may be obtained by step-growth polymerization by the dialkylation of bisphenolate salts. It involves reaction of, e.g., 4,4'-difluorobenzophenone or 1,4-bis(4-fluorobenzoyl) benzene with hydroquinone in the presence of alkali carbonates. The polymer is then isolated by removal of alkali metal fluoride and the polymerization solvent.

PEEK polymers may be processed by conventional methods such as injection molding, extrusion, compression molding, etc. However, the processing conditions used to mold PEEK can influence the crystallinity, and hence the mechanical properties. As a linear thermoplastic, polyether ether ketone can be melt processed in the temperature range of about 370 to about 420°C. While processing polyether ether ketone, no corrosive gases are evolved.

PEEK polymers are commercially available. The PEEK polymer may be a commercially available PEEK polymer. The PEEK polymer may be selected from, for example, a Victrex PEEK such as VICTREX^{®}, VICTREX^{™} PEEK ^{™} (Victrex plc), Dow DuPont PEEK (Vespel), Quadrant PEEK (Ketron), a SABIC PEEK such as, for example, LNP^{™} THERMOCOMP^{™}, LNP^{™} LUBRICOMP^{™}, LNP^{™} STAT-KON^{™}, Lehman & Voss PEEK such as, for example, LUVOCOM^{®}, RTP Company PEEK such as, for example, RTP 2200 Series; Solvay PEEKs such as, for example, KeTaSpire^{®}, Solviva^{®} Zeniva^{®}, Tribocomp^{®}, and Evonik PEEKs such as, for example, VESTAKEEP^{®} PEEKs. The PEEK polymer may be an unreinforced PEEK polymer. The PEEK maybe semi-crystalline. The PEEK may be in the form of granules. The PEEK polymer may have a melt viscosity at 400 °C of between about 130 Pa.s and about 500 Pa.s. The PEEK polymer may have a medium to high melt viscosity of between about 300 Pa.s and about 500 Pa.s under ISO 11443. The melt viscosity may be measured as [1000 s⁻¹]/Pa.s. In some cases, the PEEK has a melt volume-flow rate (MVR) of about 7 cm³/10min at 380 deg C and load 5 kg, by ISO 1133. In some cases, the PEEK may be a VESTAKEEP^{®} 5000 PEEK. In some cases, the base PEEK is not blended with a polyamide such as a nylon material. In some cases, the base PEEK polymer is unreinforced. In some cases, the base PEEK polymer may be semi crystalline.

The base polymer may be present in the composition in an amount within a range of from about 70wt% to about 95wt%, about 75wt% to about 92 wt%, or about 80 wt% to about 90 wt%.

### Thermally Conductive Fillers

The thermally conductive PAEK nanocomposite compositions comprise one or more thermally conductive fillers. The compositions can comprise a plurality of thermally conductive fillers. The thermally conductive filler may have a low electrical conductivity or is electrically insulating. The thermally conductive filler may be a thermally conductive and electrically insulating filler. In some cases, the thermally conductive filler does not include a metal, carbon, or graphite filler. The thermally conductive filler may be a ceramic filler.

The ceramic fillers that are thermally conductive and electrically insulating may be selected from boron nitride (BN), aluminum nitride (AlN), silicon nitride (Si₃N₄), silicon carbide (SiC), aluminum oxide (Al₂O₃), zinc oxide (ZnO), and magnesium oxide (MgO). In some cases, the thermally conductivity fillers may be selected from nano boron nitride, micro boron nitride, aluminum oxide, aluminum nitride, and MgO. In some cases, the thermally conductive fillers may be boron nitride (BN).

The thermally conductive nanocomposite composition may comprise a boron nitride filler. Examples of suitable boron nitride materials include boron nitride particles, boron nitride agglomerates, or a mixture thereof. BN exists in four crystalline forms hexagonal BN (hBN), cubic BN (cBN), rhombohedral BN (rBN), and wurtzite BN (wBN). In some cases, the BN may be hexagonal crystal form Boron Nitride (hBN) which offers low density and low coefficient of friction. In some cases, the boron nitride particles can be in the shape of platelets or flakes.

Suitable boron nitride materials may include hexagonal boron nitride, platelet boron nitride and boron nitride agglomerates commercially available from Momentive Performance Materials or Saint Gobain. Hexagonal boron nitride (hBN) is available commercially as CARBOTHERM^{™} BN Powder, Saint Gobain. In some cases, the boron nitride filler may comprise a majority of the thermally conductive fillers added in the composition.

The thermally conductive filler may include a thermally conductive microfiller. In some cases, the thermally conductive microfiller is a BN microfiller. The BN microfiller may have a hexagonal crystal structure. In some cases, the thermally conductive BN microfiller can can have a D50 particle size in a range of about 0.3 to about 200 microns or about 7 to about 180 microns. The boron nitride microfiller particles can have a surface area of from about 0.5 to about 10 m²/gram, or about 1 to about 7 m²/gram. In some cases, the boron nitride microfiller can have a thermal conductivity of 30-130 W/m-K.

The thermally conductive filler may include a thermally conductive nanofiller. The thermally conductive nanofiller may be a boron nitride nanopowder. Boron nitride nanopowder is commercially available from, e.g., US Research Nanomaterials, Inc. The BN nanopowder may have a hexagonal crystal structure. The BN nanopowder average particle size (APS) may have diameter in a range of about 200 to about 800 nm and a thickness in a range of about 10 nm to about 40 nm. The BN nanopowder APS may have diameter 200 nm, thickness 10 nm; diameter 500 nm, thickness 20 nm; or diameter 800 nm, thickness 40 nm. In some cases, the boron nitride nanofiller may have thermal conductivity of 700-758 W/m-K at room temperature.

The thermally conductive filler may include a first thermally conductive microfiller and a second thermally conductive microfiller.

The first thermally conductive microfiller may be a thermally conductive microfiller present in the composition in a range between about 5wt% to about 20wt%, 6 wt% to 15 wt%, or about 7 wt% to about 12 wt%.

The second thermally conductive microfiller may be a thermally conductive nanofiller present in the composition in a range between about 0.2 wt% to about 5 wt%, 0.3 wt% to 4 wt%, or about 0.5 wt% to about 3 wr%.

The weight ratio of first conductive microfiller to second conductive microfiller may be from about 20:1 to about 1:1, from about 15:1 to about 2:1, or from about 10:1 to about 4:1.

The total thermally conductive filler may be present in the composition in a combined range between about 5wt% to about 25wt%, about 7 wt% to about 20 wt%, or about 8 wt% to about 15 wt%.

### Spherical Nanofillers

The thermally-conductive nanocomposite compositions and materials include one or more spherical nanofillers. The spherical nanofillers may be spherical or globular or roughly spherical in shape. The spherical nanofiller may be used to help control rheological properties. The spherical nanofiller may be used as a thickening agent or thixotropic agent. The spherical nanofiller may be used as a reinforcing agent. The spherical nanofillers may be selected from fused silica, Nano Alumina, nano silica, boron nitride, fumed alumina, ZnO, and TiO₂. In some cases, the spherical nanofiller may be partially (e.g., ~40 to ~60%) fused into short chains, e.g., 0.1-0.2 microns in length, or about 10-30 units in length. In some cases, the spherical nanofiller may be a fumed silica nanofiller. The spherical nanofiller may include fused silica commercially available from, e.g., Gelest, Inc. or American Elements. Fused silica may also be know as fused silicon dioxide. The spherical nanofiller may include aluminum oxide commercially available from, e.g., Alfa Aesar. The spherical nanfiller may have a particle size in a range of 1-100 nm or 5-50 nm. The spherical nanofillers may be present in the composition in a range from about 0.1 wt% to about 5 wt%, about 0.5 wt% to about 4 wt%. or about 1 wt% to about 3 wt%.

### Optional Stuctural Fillers

The composition may optionally include structural fillers. In some cases, the PEEK nanocomposite composition or polymer further includes a structural fiber filler. The structural filler comprises stuctural fibers comprising elongated or fiber-shaped particles. Structural fibers may be selected from glass fiber, high silica glass fiber, aluminum silicate fiber, ceramic fiber, mullite fiber, basalt fiber, and carbon fiber. In some cases, the structural fillers may be selected from glass fibers and basalt fibers. In some cases, the structural fillers may be high silica glass fiber. The structural fillers may include structural nanofillers or structural microfillers. The optional structural fibers may be present at 0-20 wt%, 0.5-15 wt%, 1-10 wt%.

### Dispersing and Processing Additives

The thermally conductive PAEK nanocomposite composition comprises one or more dispersing and processing additives ("processing additives"). The dispersing and processing additives may be selected from the group consisting of polyhedral oligomeric silsesquioxanes (POSS), silanes, silanol-POSS, and waxes. The dispersing additive may be used to improve the dispersion of the additives throughout the polymer matrix. For example, polyhedral oligomeric silsesquioxane (POSS) may be used by itself as an additive, e.g., Octalsobutyl POSS, TriSilanolPhenyl POSS, TriSilanolIsobutyl POSS, or as a flow or dispersion additive (e.g., silanol-POSS). The POSS compounds may be purchased commercially, for example, from Hybrid Plastics. In a specific composition, the dispersing and processing additive is a POSS. The POSS may be TriSilanolPhenyl POSS. The POSS may be a TriSilanolIsobutyl POSS. The POSS may be a Octalsobutyl POSS. The dispersing and processing additives may be present in the composition in an amount within the range of from about 0.1 wt% to about 10 wt%, about 0.3 to about 7.0 wt%), about 0.5 wt% to about 5 wt%, and about 1 wt% to about 4.0 wt%.

### Properties

In the present disclosure, the tensile strength, tensile modulus, and elongation at break may be measured using ASTM D638-22 standard or ISO 527, for example, using Instron 3369 Universal Testing Machine. Toughness can be measured as the area under the stress-strain curve. Impact strength can be determined by ASTM D 256-23, Izod notched impact can be measured using Ceast 9000 Impact Tester (Instron). Tensile elongation can be measure by ASTM D638-22. Flexural strength and flexural modulus can be measured by ASTM D790-17. Tensile properties may be measured on an Instron UTM and impact strength on a TM1 Impact Tester according to ASTM standards D638-22 and D256-23, respectively. Tensile strength is the amount of force that can be applied to a plastic before it yields (stretches irreparably) or breaks. Tensile elongation is the percentage increase in length after break divided by the original length. Greater elongation indicates greater ductility. In some cases, the thermally conductive PAEK nanocomposite polymer exhibits tensile strength of >80.0 MPa or >85.0 MPa. In some cases, the thermally conductive PAEK nanocomposite polymer exhibits tensile elongation of >40%, >50%, or >60%.

Thermal Conductivity may be measured using hot disc method ISO22007-2:2015. The thermal conductivity can be measured using a hot plate transient plane heat source (hot disc) method with a Therm Test TPS2500. Surface resistivity, volume resistivity may be measured under ASTM D257, IEC 62631-3-1, electrical conductivity can be measured according to ASTM D257 and D4496, and Tensile fatigue may be measured under ASTM D3479 standard test method for tension-tension fatigue of polymer matrix materials. In some cases, the thermally conductive PAEK nanocomposite polymers exhibit a thermal conductivity of at least 0.4 W/m-K, at least 0.45 W/m-K, or at least 0.5 W/m-K.

The through-plane thermal conductivity can be measured according to ASTM E1461. Through-plane thermal conductivity may be measured at the center of the tab portion of an ASTM standard dog-bone away from the molding gate using the laser flash method (ASTM E1461) utilizing the theoretical specific heat capacity (Cₚ) values based on the composition. The in-plane thermal conductivity can be measured by constructing a laminate sample from the same location as the through-plane measurement method where the laminate sample is constructed in such a way that the thermal conductivity in the plane of the dog-bone sample can be measured either in the flow direction or perpendicular to the flow direction.

For lab-scale experiments, the compounding can be carried out, for example, in a Brabender Plasticorder batch mixer. In some cases, the compounded sample may be subjected to an extrusion coating process.

Dielectric breakdown voltage of PAEK nanocomposite insulted wire can be measured according to ASTM D1676-17. ASTM D1676-17 contains standard test methods for film-insulated magnet wire including dielectric breakdown AC voltage and dielectric breakdown AC voltage at elevated temperatures.

Dielectric strength can be measured by ASTM D149-20.

Partial discharge testing can be performed according to IEC 60034-27-1, 602270, 60172-2021. IEC 60034-27-1:2017 may be used for off-line partial discharge measurements on the winding insulation. Dissipation factor test can be performed according to test method IEC 60034-18-41 or IEC 60034-27-3.

Dielectric constant may be measured according to ASTM D150-22 at 60Hz and room temperature.

Comparative tracking index can be used to measure the electrical breakdown (tracking) properties of an insulating material. Tracking is an electrical breakdown on the surface of an insulating material where initial exposure to electrical arcing heat carbonizes the material. Comparative tracking index (CTI) can be measured by IEC 60112:2020 or ASTM D3638-21e1. As shown in FIG. 10, the comparative tracking index of PEEK nanocomposite was increased about 2-fold compared to base PEEK polymer. In some cases, the CTI of PAEK nanocomposite may be > 150 V, > 200 V, or >300 V by IEC 60112:2020.

Particle size may be determined using any appropriate method. In some cases, particle size may be determined using a Malvern instrument. In some cases, particle size may be determined by dynamic light scattering (DLS) for particles <1 nm to > 1 micrometer. In some cases, particle size may be determined by laser diffraction for <100 nm to > 2 mm. Average particle size (APS) may be determined by ISO 9276-2014 test method. D50 is a particle size metric that represents the size in microns that splits the distribution with half above and half below this diameter Uses

The PAEK nanocomposite compositions according to the disclosure may be used for coating and insulating wires, conductor primary insulation, busbars, slot liner, transformer winding, and phase to phase insulation. In some cases, the composition may be used for insulating wires for electric motor windings. The insulated wire fabrication may be performed by any appropriate process. In some cases, the insulated wire fabrication comprises an extrusion coating process comprising feeding wire from a conductor feed through a tension controller; preheating the wire; moving the preheated wire through an extruder and crosshead die; extruding melt processed PAEK nanocomposite composition around the preheated wire to provide a coated wire; and cooling the coated wire to provide the insulated wire ("magnet wire"). The cooling may include passing the coated wire through a water bath, capstan, and a diameter and tension controller to take-up to provide the insulated wire. In some cases, the insulation thickness may be from in a range of about 25 to about 250 microns, about 50 to about 200 microns, or about 75 to about 150 microns.

Apart from e-motor winding applications, thermally conductive electrically insulating PAEK nanocomposite according to the disclosure can also be used to coat other electrical conducting substrates such as busbar, battery connecting cable, engine connections used for power distribution in e-mobility applications.

Improving the thermal conductivity of PAEK polymer materials, along with improving dielectric breakdown (DB) strength, low comparative tracking index (CTI), high voltage tracking resistance (HVTR), and partial discharge (PD) resistance will allow for increased power requirements, reduction in size, and support of extreme high voltage applications of electric motors with improved safety and reliability.

### EXAMPLES

### Example 1. Nanocomposite Formulations

PEEK Nanocomposite formulations were prepared by compounding materials as shown in Table 2 to provide test nanocomposite formulations -3 & -4. In Table 2 base PAEK polymer is a PEEK polymer.; The thermally-conductive platelet-shaped microfiller is a boron nitride (BN) microfiller (BN Powder). The thermally-conductive platelet-shaped nanofiller is a boron nitride (BN) nanofiller (Nano BN). The spherical nanofiller is a fumed SiO₂ spherical nanofiller. The processing additive is a POSS.

**Table 2. PEEK Nanocomposite Formulations**

| Materials | Composition (Weight %) | | Function |
|---|---|---|---|
| | Test formulation-3 inventive formulation | Test formulation-4 inventive formulation | |
| PEEK | 80-90 | 80-90 | Base PAEK polymer |
| BN Powder | 9-12 | 7-9 | Thermally-conductive platelet-shaped microfiller |
| Nano BN | 0.5-1.5 | 1.5-3 | Thermally-conductive platelet-shaped nanofiller |
| Fumed SiO₂ | 0.5-3 | 0.5-3 | Spherical nanofiller |
| POSS | 1-3 | 2-4 | Processing additive |

### Example 2. PEEK Nanocomposite Material Performance

The performance of inventive PEEK nanocomposite compositions for use in wire insulation was compared to that of base PEEK polymer. Results are shown in Table 3.

**Table 3. PEEK Nanocomposite Material Performance**

| Property | Base PEEK | Traditional enamel | Initial goal | Test formulation-3 | Test formulation-4 |
|---|---|---|---|---|---|
| Dielectric breakdown (DB) strength (kV/mm) | 16.0 | 11.0 | >16.0 | 24.84 | 22.83 |
| Dielectric Constant | 2.84 | -3.1 -5.0 | <3.0 | 2.90 | 2.92 |
| Thermal conductivity (W/m-K) | 0.25 | ~0.1-0.2 | >0.40 | 0.47 | 0.43 |
| Tensile strength (MPa) | 95.0 | - | >80.0 | 89.6 | 88.8 |
| Tensile elongation (%) | 35 | - | >20 | 24.6 | 69.7 |

The claimed PEEK nanocomposite compositions comprising a particular combination of thermal fillers and nanofiller was found to significantly improve dielectric and thermal properties of PEEK nanocomposites. When compared to base PEEK material, the PEEK nanocomposite of the disclosure exhibited ~35% DB strength increase, about 2X thermal conductivity, similar strength, and improved elongation.

### Example 3. Wire coating extrusion process

An extrusion coating process was developed. Copper wire from a conductor feed was fed through a tension controller, preheated, and moved through an extruder and crosshead die. The PEEK nanocomposite composition was heated and extruded through a mandrel tip to coat the preheated copper wire. The coated wire was moved through a water bath, capstan, and a diameter and tension controller to take-up. The PEEK nanocomposite material was successfully extruded to manufacture insulated wire ("magnet wire"). In a first run, the target insulation thickness was -100+/- 10 micrometers. Insulated 8 AWG Cu-wire coated with (a) base PEEK, (b) inventive PEEK nanocomposite 3, and (c) inventive PEEK nanocomposite 4 was prepared. In a second run, rectangular magnet wire was successfully prepared via the extrusion coating process. FIG. 11A-C shows insulated rectangular shaped Cu-magnet-wire prepared by the extrusion coating process. FIG. 11A shows comparative base PEEK insulated rectangular Cu-wire. FIG. 11B shows inventive PEEK Nanocomposite (TD3-8) insulated rectangular Cu-wire. FIG. 11C shows inventive PEEK Nanocomposite (TD4-5) insulated rectangular Cu-wire. A target insulation thickness of minimum 250 micrometers was achieved. The inventive insulation evaluation included pass of the "100% AC Spark test" (pinhole free).

### Example 4. Electrical performance

### Dielectric breakdown voltage

The dielectric breakdown voltage of insulted Cu-wire was tested according to ASTM D1676-17. Test samples included wire coated with base PEEK, inventive PEEK nanocomposite 3, inventive PEEK nanocomposite 4, or commercial reference PEEK coated rectangular wire at RT (25 deg C) and high temperatures (100 deg C and 180 deg C). Nominal thickness of wire insulation was ∼0.1 mm. Dielectric breakdown voltage test results are shown in FIG. 4.

At 25 deg C, wire coated with inventive PEEK nanocomposite compositions exhibited dielectric breakdown voltage of greater than 13 kV, compared to wire coated with base PEEK exhibiting less than 12 kV and commercial reference PEEK coated rectangular wire exhibiting ∼10 kV when tested according to ASTM D1676-17

At 100 deg C, wire coated with inventive PEEK nanocomposite compositions exhibited dielectric breakdown voltage of greater than 15 kV, compared to wire coated with base PEEK exhibiting about 13 kV and commercial reference PEEK coated rectangular wire exhibiting less than 10 kV when tested according to ASTM D1676-17.

At 180 deg C, wire coated with inventive PEEK nanocomposite compositions exhibited dielectric breakdown voltage of greater than 14 kV, compared to wire coated with base PEEK exhibiting less than 12 kV and commercial reference PEEK coated rectangular wire exhibiting less than 10 kV when tested according to ASTM D1676-17.

The PEEK nanocomposite insulated wire exhibited significantly higher breakdown voltage than base PEEK polymer (-24%) coated wire at RT as well as at elevated temperatures as shown in FIG. 4. The PEEK nanocomposite retained excellent electrical properties even at elevated temperatures.

### Partial Discharge test

Partial discharge (PD) is rapidly repeating electrical breakdown that only partially bridges the insulation between the conductors. Partial discharge testing of inventive and reference insulated wires was performed according to IEC 60034-27-1, 602270, 60172-2021. For example, to IEC 60034-27-1:2017 may be used for off-line partial discharge measurements on the winding insulation. Test parameters included Voltage rate: 500 V/s; frequency: 60 Hz; test medium: air; Temperature 25+/-5 deg C; relative humidity: 45+/-5%. Results are shown in FIGs. 5-8.

Bar graphs of partial discharge inception voltage (PDIV) vs. temperature are shown at FIG. 5 and 6. Partial discharge tests for inventive PEEK nanocomposite coated wires compared to base PEEK coated wire were performed at RT (25 deg C), 100 deg C, and 180 deg C at nominal 0.1 mm thickness as shown in FIG. 5. Test samples included wire coated with base PEEK, inventive PEEK nanocomposite 3-8, and inventive PEEK nanocomposite 4-5, having insulation thickness of 100 +/- 20 micrometers. One of the PEEK nanocomposite insulations exhibited significantly higher (~9%) PDIV than base PEEK at RT. PDIV decreased with increase in temperature indicating less PD resistance of materials. The inventive PEEK nanocomposite compositions exhibited better resistance to PD even at increased temperatures over base PEEK (inc. of at least about -14% at 180 deg C).

A bar graph of PDIV vs. temperature for a comparative commercial reference PEEK coated rectangular wire having an insulation thickness of ∼110-130 micrometers is shown in FIG. 6. Wire type, dimension, insulation thickness can affect PD. Commercial reference PEEK coated rectangular wire appeared to have lower PDIV at RT (25 deg C) and higher temperatures (100 deg C and 180 deg C) when compared to either of the inventive PEEK nanocomposite coated wires. A bar graph of PDIV at RT (25 deg C) for TD3-8-coated wire, TD4-5 coated wire, base PEEK coated wire and a comparative commercial reference PEEK coated rectangular wire is shown at FIG. 7. Partial discharge extinction voltage (PDEV) at RT is shown at FIG. 8. Inventive PEEK nanocomposite composition 3 insulation exhibited -13% higher PDEV than base PEEK wire.

### Dissipation Factor Test

Dissipation factor test of insulated wire at room temperature, 100 deg C, and 180 deg C was performed according to test method IEC 60034-18-41. Test parameters included voltage rate: 500 V/s, frequency: 60 Hz, room temperature (25 ± 5 deg C), relative humidity: 45±5 %. Results are shown in FIG. 9. Round wire coated with PEEK nanocomposite compositions 3-8 and 4-5 show similar loss factor as round wire coated with base PEEK polymer at room temperature and 100 deg C. Inventive PEEK nanocomposite coated round wire TD3-8 and TD4-5 showed similar DF or loss factor @ < 1% DF as base PEEK coated wire at 25 deg C and 100 deg C. Inventive PEEK nanocomposite coated round wire exhibited lower DF values than base PEEK coated round wire at 180 deg C (< ~10-14%). The lower the DF, the more efficient the insulator system.

### Electrical Resistance

The electrical resistance of the comparative base PEEK, and inventive PEEK nanocomposites were tested under ASTM D257-14(2021)e1 using Test Voltage Set: 1000 V; Current Set: 20 mA; and temperature of 22±5 °C and Relative Humidity: 20%. The average surface resistance (Ohm) and average Volume Resistance (Ohm-cm) for base PEEK, inventive PEEK Nanocomposite (TD3-8) and Inventive PEEK Nanocomposite (TD4-5) are shown in FIG. 12 bar graph. The inventive PEEK nanocomposites (TD3-8 and TD4-5) exhibited electrical resistivity within the insulator range (>10¹³ Ohm-cm) similar to the base PEEK material.

### Dielectric Breakdown Voltage of Rectangular Wire

The breakdown voltage of insulated rectangular wire at RT was measured under ASTM D1676-17 using test medium: oil. The average insulation thickness based on short side & corners area were used for breakdown strength calculation (FIG. 13). Results are shown in Table 4 and FIG. 14.

**Table 4. Electrical Performance: Dielectric Breakdown of Rectangular Wire**

| Test Sample | Breakdown Voltage (kV) | Breakdown Strength (kV/mm) | Nominal thickness* |
|---|---|---|---|
| Base PEEK wire | 15.72±0.64 | 51.59±2.94 | -0.305 mm |
| Inventive TD3-8 wire | 27.51±1.48 | 87.47±7.25 | ~0.316 mm |
| Inventive TD4-5 wire | 20.28±2.04 | 80.60±9.82 | ~0.254 mm |

| | | | |
|---|---|---|---|
| *Avg insulation thickness based on short side & corners area were used for breakdown strength calculation | | | |

FIG. 14 shows a bar graph of Dielectric Breakdown Strength (kV/mm at room temperature). The inventive PEEK nanocomposite insulated wire exhibited significantly higher dielectric breakdown strength than comparative base PEEK insulated wire (an increase of -50-70%) under ASTM D1676.

### Partial Discharge Test of Rectangular Wire at RT

A Partial Discharge (PD) test was performed at room temperature on the base PEEK and PEEK nanocomposite insulated rectangular Cu-wires. 6 specimens/sample were tested under IEC 600034-27-1:2017. Partial Discharge is a localized electrical discharge that only partially bridges the insulation between the conductors. PD can occurs when there is a stressed region due to some impurity/cavity inside the insulation or when there is a protrusion outside it. Nominal thickness values for the insulation was used as shown in Table 4. FIG. 15 shows a bar graph of Partial Discharge Inception Voltage (PDIV) at room temperature for comparative base PEEK insulated rectangular wire, and inventive PEEK nanocomposite insulated rectangular wires TD3-8 and TD4-5. The inventive PEEK nanocomposite insulated wires exhibited significantly higher (∼17%) PDIV than comparative base PEEK insulated wire at RT under 1EC 60034-27-1.

The effect of temperature on PDIV at room temperature, 100 deg C and 180 deg C was evaluated. Results are shown in FIG. 16. FIG. 16 shows a bar graph of Partial Discharge Inception Voltage (PDIV) at room temperature, 100 deg C, and 180 deg C for comparative base PEEK insulated rectangular wire, and inventive PEEK nanocomposite insulated rectangular wires TD3-8 and TD4-5. The inventive PEEK nanocomposite insulated wires TD3-8 and TD4-5 exhibited better resistance to PD even at elevated temperatures (up to ∼10% at 180 deg C) compared to base PEEK insulated wire under IEC 600034-27-1:2017.

### Insulation Dissipation Factor (DF)

An insulation Dissipation Factor test was performed under IEC 60034-18-41 at Voltage Rate: 500 V/s; Frequency: 60 Hz; Test Medium: air; and temperatures of 25 to 180±5 C on comparative the base PEEK and inventive PEEK nanocomposite insulated rectangular Cu-wires TD3-8 and TD4-5. Results are shown in FIG. 17. Rectangular wire coated with PEEK nanocomposites showed similar loss factor as base PEEK at RT and 100 deg C (<1%). Rectangular wires coated with PEEK nanocomposites TD3-8 and TD4-5 exhibited lower DF values than base PEEK wire at 180 deg C (<15-20%). The lower the DF = more efficient the insulator system.

### NEMA Elongation Test

An insulation Mechanical Test: Adherence & Flexibility Test Method was performed under NEMA 1000 MW. NEMA MW 1000 is approved as an American National Standard through NEMA MW 1000 Consensus Body accredited by the American National Standards Institute (ANSI). A minimum 30% elongation was required. A cross-head speed of 12"/min and Observation: Normal Vision were employed. Results are shown in Table 5 and FIG. 18.

**Table 5. NEMA 1000MW Adherence**

| Sample (5 specimens each) | Observation |
|---|---|
| Base PEEK Wire | No visible indication of separation b/w the substrate & the coating |
| TD3-8 PEEK Nanocomposite Wire | No visible indication of separation b/w the substrate & the coating |
| TD4-5 PEEK Nanocomposite Wire | No visible indication of separation b/w the substrate & the coating |

FIG. 18 shows a bar graph of insulated wire elongation at break. The comparative base PEEK insulated rectangular Cu-wire exhibited 52.4% coating elongation at break. Inventive TD3-8 and TD4-5 insulated rectangular Cu-wire exhibited 43.7% and 45.9% elongation at break, respectively. Inventive PEEK nanocomposite coated wire exhibited at least 30% elongation, at least 35% elongation, or at least 40% elongation.

### Clauses

Clause 1. A PAEK nanocomposite composition comprising: a poly(aryl ether ketone) (PAEK) base polymer; one or more thermally conductive fillers; a spherical nanofiller; and a dispersing and processing additive.

Clause 2. The composition according to clause 1, wherein the PAEK base polymer is selected from the group consisting of a poly(ether ether ketone) (PEEK) and a poly(aryl ether ketone ketone) (PEKK).

Clause 3. The composition of clause 1 or 2, comprising the PAEK base polymer in a range of from about 70wt% to about 95wt%, about 75wt% to about 92 wt%, or about 80 wt% to about 90 wt%.

Clause 4. The composition according to any one of clauses 1-3, wherein the one or more thermally conductive fillers are selected from the group consisting of selected from boron nitride (BN), aluminum nitride (AIN), silicon nitride (Si₃N₄), silicon carbide (SiC), aluminum oxide (Al₂O₃), zinc oxide (ZnO), and magnesium oxide (MgO).

Clause 5. The composition according to any one of clauses 1-4, comprising the one or more thermally conductive fillers in a combined range between about 5wt% to about 25wt%, about 7 wt% to about 20 wt%, or about 8 wt% to about 15 wt%.

Clause 6. The composition according to any one of clauses 1-5, wherein the one or more thermally conductive fillers comprise a thermally conductive microfiller and a thermally conductive nanofiller.

Clause 7. The composition according to clause 6, wherein the weight ratio of the thermally conductive microfiller to the thermally conductive nanofiller from about 20:1 to about 1:1, from about 15:1 to about 2:1, or from about 10:1 to about 4:1.

Clause 8. The composition according to clause 6 or 7, wherein the thermally conductive microfiller has a D50 particle size in a range of about 0.3 to about 200 microns or about 7 to about 180 microns.

Clause 9. The composition according to any one of clauses 6-8, wherein the thermally conductive nanofiller has an average particle size (APS) having a diameter in a range of about 200 to about 800 nm and a thickness in a range of about 10 nm to about 40 nm.

Clause 10. The composition according to any one of clauses 1-9, wherein the spherical nanofiller is selected from the group consistinf of fused silica, nano alumina, nano silica, boron nitride, fumed alumina, zinc oxide, and titanium dioxide.

Clause 11. The composition of any one of clauses 1-10, comprising the spherical nanofiller in a range of from about 0.1 wt% to about 5 wt%, about 0.5 wt% to about 4 wt%. or about 1 wt% to about 3 wt%.

Clause 12. The composition according to any one of clauses 1-11, wherein the dispersing and processing additive is selected from the group consisting of polyhedral oligomeric silsesquioxanes (POSS), silanes, silanol-POSS, and waxes, optionally wherein the POSS is selected from the group consisting of trisilanolphenyl POSS, trisilanolisobutyl POSS, and octaisobutyl POSS.

Clause 13. The composition according to any one of clauses 1-12, comprising the dispersing and processing additive is in a range from about 0.1 wt% to about 10 wt%, about 0.3 to about 7.0 wt%, about 0.5 wt% to about 5 wt%, and about 1 wt% to about 4.0 wt%.

Clause 14. A PAEK nanocomposite composition comprising: about 70wt% to about 95wt% of a poly(aryl ether ketone) (PAEK) base polymer; about 5wt% to about 25wt% of one or more thermally conductive fillers; about 5 wt%, about 0.5 wt% of a spherical nanofiller; and about 0.1 wt% to about 10 wt% of a dispersing and processing additive.

Clause 15. The PAEK nanocomposite composition of any one of clauses 1-14 further comprising one or more structural fillers, optionally wherein the structural fillers are selected from the group consisiting of glass fiber, high silica glass fiber, aluminum silicate fiber, ceramic fiber, mullite fiber, basalt fiber, and carbon fiber.

Clause 16. A thermally conductive PAEK nanocomposite polymer formed from the composition according to any one of clauses 1-15, wherein the PAEK nanocomposite polymer exhibits one or more properties selected from the group consisting of
tensile strength of >80.0 MPa or >85.0 MPa; and
tensile elongation of >40%, >50%, or >60%.

Clause 17. A PAEK nanocomposite insulated wire, wherein the PAEK nanocomposite is formed from a composition according to any one of clauses 1-16.

Clause 18. The PAEK nanocomposite insulated wire according to clause 17, wherein the wire is selected from the group consisting of copper wire, and aluminum wire.

Clause 19. The PAEK nanocomposite insulated wire according to clause 17 or 18, the insulation having a nominal thickness of from from about 25 to about 1,000 microns, about 25 to about 750 microns, about 25 to about 500 microns, about 25 to about 350 microns, about 25 to about 300 microns, about 25 to about 250 microns, about 50 to about 200 microns, or about 75 to about 150 microns.

Clause 20. The PAEK nanocomposite insulated wire according to any one of clauses 17-19, wherein the insulated wire exhibits one or more properties selected from the group consisting of dielectric breakdown strength of > than 17 kV/mm, > 20 kV/mm, or > 22 kV/mm; dielectric breakdown voltage of > 13 kV at 25 deg C; dielectric breakdown voltage of > 15 kV at 1 00 deg C; dielectric breakdown voltage of > 14 kV at 180 deg C; thermal conductivity of > 0.40 W/m-K; dielectric constant < 3.0; partial discharge inception voltage of at least 1200 V at 25 deg C and nominal 0.1 mm thickness; partial discharge inception voltage of at least 1100 V at 100 deg C and nominal 0. 1 mm thickness; partial discharge inception voltage of at least 1 000 V at 180 deg C and nominal 0.1 mm thickness; and partial discharge inception voltage (PDIV) of at least 2000 V at 25 deg C at nominal 0.3 mm thickness.

Clause 21. A method of making a PAEK nanocomposite insulated wire according to any one of claims 17-20, the method comprising: feeding a wire from a conductor feed through a tension controller; preheating the wire; moving the preheated wire through an extruder and crosshead die; extruding a melt processed PAEK nanocomposite composition around the preheated wire to provide a coated wire; and cooling the coated wire to provide the insulated wire.

Clause 22. An insulated article coated with a thermally conductive PAEK nanocomposite polymer prepared from a composition according to any one of clauses 1 to 15.

Clause 23. The insulated article according to clause 22, selected from the group consisting of a wire, conductor, busbar, slot liner, transformer winding, and phase to phase insulation.

Clause 24. The insulated article of clause 22 or 23, wherein the insulation has a nominal thickness of from about 25 to about 1,000 microns, about 25 to about 750 microns, about 25 to about 500 microns, about 25 to about 350 microns, about 25 to about 300 microns, about 25 to about 250 microns, about 50 to about 200 microns, or about 75 to about 150 microns.

The above specification, examples and data provide a complete description of the manufacture and use of the composition of the invention. Since many embodiments of the invention can be made without departing from the spirit and scope of the invention, the invention resides in the claims hereinafter appended.

## Claims

1. A PAEK nanocomposite composition comprising:
a poly(aryl ether ketone) (PAEK) base polymer;
one or more thermally conductive fillers;
a spherical nanofiller; and
a dispersing and processing additive.

2. The PAEK nanocomposite composition according to claim 1, wherein the PAEK base polymer is selected from the group consisting of a poly(ether ether ketone) (PEEK) and a poly(aryl ether ketone ketone) (PEKK).

3. The composition of claim 1 or 2, comprising the PAEK base polymer in a range of from about 70 wt% to about 95 wt%, about 75 wt% to about 92 wt%, or about 80 wt% to about 90 wt%.

4. The composition according to any one of claims 1-3, wherein the one or more thermally conductive fillers are selected from the group consisting of selected from boron nitride (BN), aluminum nitride (AIN), silicon nitride (Si₃N₄), silicon carbide (SiC), aluminum oxide (Al₂O₃), zinc oxide (ZnO), and magnesium oxide (MgO),
optionally wherein the one or more thermally conductive fillers is in a combined range between about 5 wt% to about 25 wt%, about 7 wt% to about 20 wt%, or about 8 wt% to about 15 wt%.

5. The composition according to any one of claims 1-4, wherein the one or more thermally conductive fillers comprise a thermally conductive microfiller and a thermally conductive nanofiller,
wherein the thermally conductive microfiller has a D50 particle size in a range of about 0.3 to about 200 microns or about 7 to about 180 microns,
wherein the thermally conductive nanofiller has an average particle size (APS) having a diameter in a range of about 200 to about 800 nm and a thickness in a range of about 10 nm to about 40 nm, and
optionally wherein the weight ratio of the thermally conductive microfiller to the thermally conductive nanofiller from about 20:1 to about 1:1, from about 15:1 to about 2:1, or from about 10:1 to about 4:1.

6. The composition according to any one of claims 1-5, wherein the spherical nanofiller is selected from the group consistinf of fused silica, nano alumina, nano silica, boron nitride, fumed alumina, zinc oxide, and titanium dioxide,
optionally wherein the spherical nanofiller is in a range of from about 0.1 wt% to about 5 wt%, about 0.5 wt% to about 4 wt%. or about 1 wt% to about 3 wt%.

7. The composition according to any one of claims 1-6, wherein the dispersing and processing additive is selected from the group consisting of polyhedral oligomeric silsesquioxanes (POSS), silanes, silanol-POSS, and waxes,
optionally wherein the dispersing and processing additive is in a range from about 0.1 wt% to about 10 wt%, about 0.3 to about 7.0 wt%, about 0.5 wt% to about 5 wt%, and about 1 wt% to about 4.0 wt%.

8. The composition according to any one of claims 1-7, further comprising one or more structural fillers, optionally wherein the structural fillers are selected from the group consisiting of glass fiber, high silica glass fiber, aluminum silicate fiber, ceramic fiber, mullite fiber, basalt fiber, and carbon fiber.

9. The PAEK nanocomposite composition of any one of claims 1-8 comprising:
about 70 wt% to about 95 wt% of the poly(aryl ether ketone) (PAEK) base polymer;
about 5 wt% to about 25 wt% of the one or more thermally conductive fillers;
about 5 wt%, about 0.5 wt% of the spherical nanofiller; and
about 0.1 wt% to about 10 wt% of the dispersing and processing additive.

10. A thermally conductive PAEK nanocomposite polymer material formed from the composition according to any one of claims 1-9, wherein the PAEK nanocomposite polymer material exhibits one or more properties selected from the group consisting of
tensile strength of >80.0 MPa or >85.0 MPa; and
tensile elongation of >40%, >50%, or >60%.

11. A PAEK nanocomposite insulated wire, wherein the PAEK nanocomposite insulation is formed from a composition according to any one of claims 1-9,
optionally wherein the wire is selected from the group consisting of copper wire, and aluminum wire.

12. The PAEK nanocomposite insulated wire according to claim 11, wherein the PAEK nanocomposite insulation has a nominal thickness of from about 25 to about 1,000 microns, about 25 to about 750 microns, about 25 to about 500 microns, about 25 to about 350 microns, about 25 to about 300 microns, about 25 to about 250 microns, about 50 to about 200 microns, or about 75 to about 150 microns.

13. The PAEK nanocomposite insulated wire according to claim 11 or 12, wherein the insulated wire exhibits one or more properties selected from the group consisting of
dielectric breakdown strength of > than 17 kV/mm, > 20 kV/mm, or > 22 kV/mm;
dielectric breakdown voltage of > 13 kV at 25 deg C;
dielectric breakdown voltage of > 15 kV at 100 deg C;
dielectric breakdown voltage of > 14 kV at 180 deg C;
thermal conductivity of > 0.40 W/m-K;
dielectric constant < 3.0;
partial discharge inception voltage (PDIV) of at least 1200 V at 25 deg C at nominal 0.1 mm thickness;
partial discharge inception voltage of at least 1100 V at 100 deg C at nominal 0.1 mm thickness;
partial discharge inception voltage of at least 1000 V at 180 deg C at nominal 0.1 mm thickness; and
partial discharge inception voltage (PDIV) of at least 2000 V at 25 deg C at nominal 0.3 mm thickness.

14. A method of making the PAEK nanocomposite insulated wire according to any one of claims 11-13, the method comprising
feeding a wire from a conductor feed through a tension controller;
preheating the wire;
moving the preheated wire through an extruder and crosshead die;
extruding a melt processed PAEK nanocomposite composition around the preheated wire to provide a coated wire; and
cooling the coated wire to provide the insulated wire,
wherein the PAEK nanocomposite composition comprises a poly(aryl ether ketone) (PAEK) base polymer; one or more thermally conductive fillers; a spherical nanofiller; and a dispersing and processing additive.

15. An insulated article coated with a thermally conductive PAEK nanocomposite polymer prepared from a composition according to any one of claims 1-9, optionally wherein the article is selected from the group consisting of a wire, conductor, busbar, slot liner, transformer winding, and phase to phase insulation.
